# EUROPEAN PATENT APPLICATION

(11) **EP 4 841 127 A1**
(43) Date of publication of application: **18.11.2026**
(21) Application number: 25176518.6
(22) Date of filing: 14.05.2025
(51) Int. Cl.: F16D 69/02

(54) **FRICTION MATERIAL**

(71) Applicant: Carboleg Rohstoffhandelsgesellschaft für Carbonprodukte und Legierungen mbH, 42549 Velbert (DE)
(72) Inventor: ENOV, Leonid, 65187 Wiesbaden (DE)
(74) Representative: Jeck, Jonathan

(57) **Abstract**

The present disclosure provides a method for producing a friction material, comprising: obtaining metal oxide/silicate particles that have been previously exposed to high-temperature treatment above 1000°C; processing the high-temperature treated metal oxide/silicate particles to achieve a particle size distribution of 30-120 microns; and incorporating the processed high-temperature treated metal oxide/silicate particles into a resin matrix to form the friction material. The metal oxide/silicate particles comprise at least one of magnesium oxide, zirconium oxide, zirconium silicate, and chromium oxide. The method enables the production of friction materials with improved mechanical properties using recycled refractory materials.

## Description

### FIELD OF INVENTION

The present disclosure relates to A method for producing a friction material and friction materials for use such as in braking and clutch systems, and more particularly to a friction material composition incorporating mineral components that have been previously subjected to high-temperature treatment according to the patent claims.

### BACKGROUND

Friction materials play a crucial role in various mechanical systems, particularly in braking and clutch applications. These materials are designed to generate controlled friction when pressed against a moving surface, converting kinetic energy into heat energy and thereby slowing or stopping motion. Typical friction materials consist of a combination of components including binders, reinforcing fibers, abrasives, lubricants, and fillers.

Mineral components are commonly used in friction material formulations due to their ability to enhance thermal stability, wear resistance, and overall performance. Magnesium oxide, zirconium oxide, zirconium silicate, and chromium oxide are among the mineral additives frequently incorporated into friction materials. These minerals contribute to the friction coefficient, help dissipate heat, and can improve the durability of the final product.

Traditionally, virgin mineral resources have been the primary source for these components in friction material manufacturing. However, the properties of virgin minerals may not always be optimal for friction material applications, potentially leading to variations in performance or requiring additional processing steps.

Furthermore, the thermal stability of friction materials is a persistent challenge in high-performance applications. Brake fade, which occurs when friction materials lose effectiveness at high temperatures, remains a concern in scenarios involving repeated or prolonged braking. Enhancing the thermal properties of friction materials without compromising other performance aspects continues to be an area of focus for researchers and manufacturers.

It has been appreciated that a method is needed that overcomes one or more of these problems.

### SUMMARY

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

A method for producing a friction material is provided. The method comprises obtaining metal oxide/silicate particles that have been previously exposed to high-temperature treatment above 1000°C, processing these particles to achieve a particle size distribution of 30-120 microns, and incorporating the processed particles into a resin matrix to form the friction material. The metal oxide/silicate particles comprise at least one of magnesium oxide, zirconium oxide, zirconium silicate, and chromium oxide.

This method allows for the utilization of recycled materials in friction material production, reducing environmental impact and potentially lowering production costs while maintaining or improving performance characteristics.

Preferably, the metal oxide particles comprise magnesium oxide particles obtained from used magnesium oxide-carbon refractory bricks. This allows for the repurposing of industrial waste materials, contributing to a more circular economy.

Preferably, the magnesium oxide particles contain 5-15% residual carbon by weight. The presence of residual carbon in the magnesium oxide particles can enhance the thermal conductivity and mechanical strength of the resulting friction material.

Preferably, the metal oxide/silicate particles comprise zirconium silicate particles obtained from used zirconium-containing refractory materials. This provides an additional source of recycled materials for the friction material composition.

Preferably, the metal oxide/silicate particles comprise chromium oxide particles obtained from used chromium-containing refractory materials. Utilizing these recycled materials from various sources allows for a more sustainable production process and reduces waste in other industries.

Preferably, processing the high-temperature treated metal oxide/silicate particles comprises grinding or grinding and sieving the particles to achieve the particle size distribution of 30-120 microns. This processing step ensures optimal particle size for incorporation into the friction material, which can affect its performance characteristics.

Preferably, incorporating the processed high-temperature treated metal oxide particles into the resin matrix comprises mixing the particles with a phenolic resin. This step allows for effective integration of the recycled particles into the friction material matrix.

Preferably, the method further comprises adding fibrous reinforcement materials to the mixture of metal oxide particles and phenolic resin. The addition of fibrous reinforcement materials can improve the mechanical strength and wear resistance of the friction material.

Preferably, the fibrous reinforcement materials comprise at least one of aramid, steel, polymer, glass, carbon or natural fibers. This variety of reinforcement options allows for tailoring the friction material properties to specific applications.

A friction material composition is provided. The composition comprises 15-40% by weight of metal oxide/silicate particles that have been previously subjected to high-temperature treatment above 1000°C, with a particle size distribution of 30-120 microns, 5-30% by weight of a phenolic resin matrix, 5-20% by weight of fibrous reinforcement materials selected from at least one of aramid fibers or glass fibers, and 0-25% by weight of additional additives. The friction material exhibits a friction coefficient between 0.35 and 0.50.

This composition provides a balance of recycled materials and performance-enhancing components to create a friction material with desirable friction characteristics.

Preferably, the metal oxide/silicate particles comprise magnesium oxide particles obtained from used magnesium oxide-carbon refractory bricks. The use of these specific recycled materials can impart unique properties to the friction material, such as improved thermal stability or wear resistance.

Preferably, the metal oxide/silicate particles comprise zirconium oxide/silicate particles obtained from used zirconium-containing refractory materials. This allows for the incorporation of another type of recycled material, potentially enhancing different aspects of the friction material's performance.

Preferably, the metal oxide/silicate particles comprise chromium oxide particles obtained from used chromium-containing refractory materials. The inclusion of chromium oxide particles can contribute to the overall performance and durability of the friction material.

Preferably, the fibrous reinforcement materials comprise aramid fibers. Aramid fibers can provide high strength and heat resistance to the friction material.

Preferably, the fibrous reinforcement materials comprise glass fibers. Glass fibers can enhance the overall strength and thermal stability of the friction material.

Preferably, the friction material exhibits improved mechanical strength compared to a friction material produced using virgin metal oxide/silicate particles without previous high-temperature treatment. This improvement in mechanical strength demonstrates the potential benefits of using recycled, high-temperature treated particles in friction material production.

Preferably, the metal oxide, in particular the MgO particles may contain 5-15% residual carbon by weight. The presence of residual carbon can contribute to improved thermal properties and potentially enhance the overall performance of the friction material.

The invention provides a sustainable approach to friction material production by incorporating recycled metal oxide/silicate particles from various industrial sources. This not only reduces waste and environmental impact but also potentially enhances the performance characteristics of the resulting friction material. The method and composition described allow for the production of friction materials with tailored properties suitable for a range of applications, including brake pads, clutches, and other high-performance friction components.

The foregoing general description of the illustrative embodiments and the following detailed description thereof are merely exemplary aspects of the teachings of this disclosure and are not restrictive.

Each of the mentioned features in this patent application is disclosed as freely combinable with any feature or subset of features of this disclosure.

### BRIEF DESCRIPTION OF FIGURES

Non-limiting and non-exhaustive examples are described with reference to the following figures.

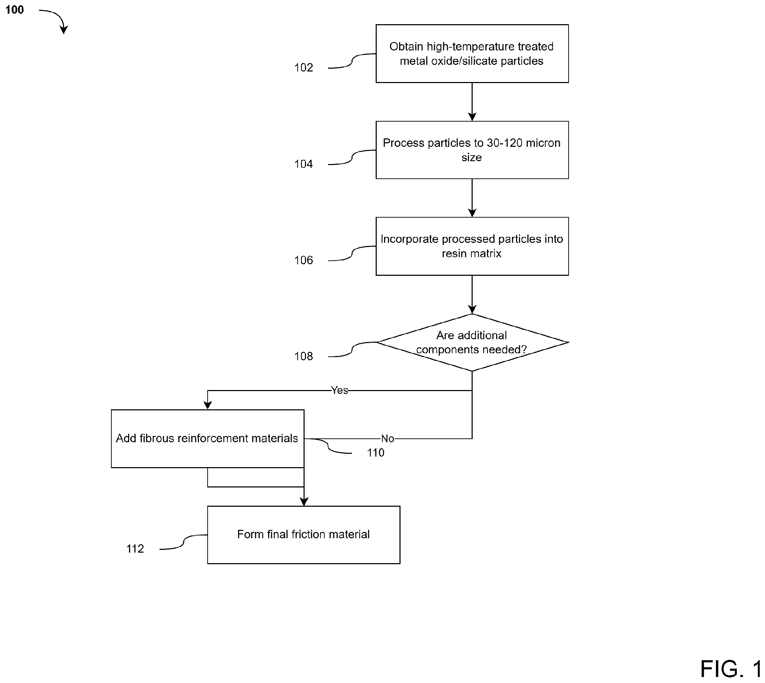

FIG. 1 illustrates a flowchart for a method of producing friction material, according to the present disclosure.

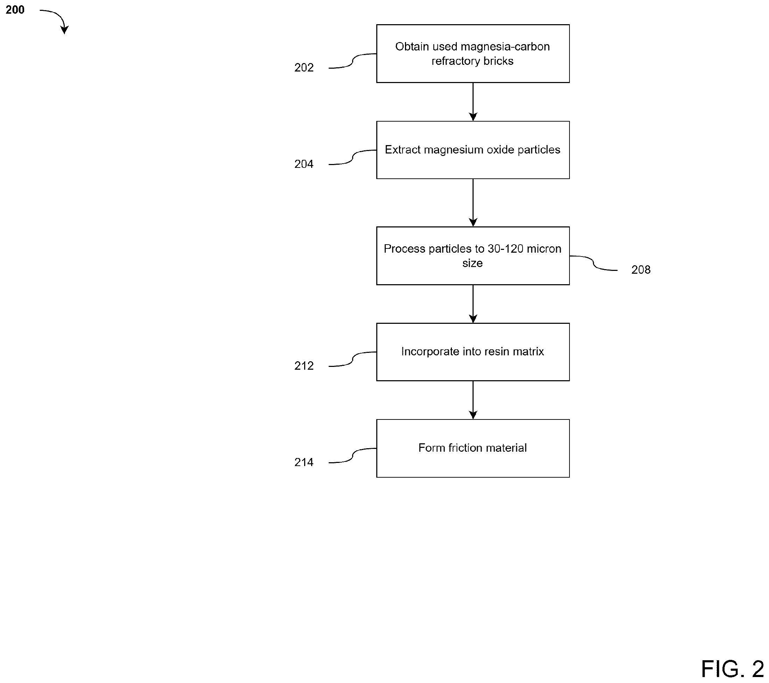

FIG. 2 illustrates a flowchart for a method of producing friction material according to an embodiment.

### DETAILED DESCRIPTION

The following description sets forth exemplary aspects of the present disclosure. It should be recognized, however, that such description is not intended as a limitation on the scope of the present disclosure. Rather, the description also encompasses combinations and modifications to those exemplary aspects described herein.

The term "high-temperature treatment" as used herein refers to a process in which materials are exposed to temperatures exceeding 1000°C. This treatment may occur during the original manufacturing or use of the materials, such as in refractory applications, and is not necessarily a separate step performed specifically for the production of friction materials. The effects of this high-temperature exposure on the materials' properties are retained and utilized in the subsequent friction material production process.

The present disclosure relates to friction materials and methods for their production. In particular, the disclosure describes the use of high-temperature treated metal oxide/silicate particles in friction material compositions. These particles may be obtained from recycled sources, such as used refractory materials, which have been previously exposed to high temperatures during their lifecycle.

Friction materials produced using these high-temperature treated particles may exhibit comparable or improved performance characteristics compared to materials made with virgin raw materials. Additionally, the use of recycled sources for these particles may lead to a significant reduction in the carbon footprint associated with friction material production. In some examples, the carbon footprint reduction may be up to 98% lower when compared to conventional production methods, as measured according to ISO 14067 (at the time of filing) standards.

The friction materials described herein may be suitable for a wide range of applications. These applications may include, but are not limited to, friction components for trains, trucks, cars, and various industrial applications requiring high-performance friction materials.

By utilizing high-temperature treated metal oxide/silicate particles, particularly those sourced from recycled materials, the present disclosure provides an approach to friction material production that may combine environmental benefits with maintained or enhanced performance characteristics.

The method 100 for producing friction material begins with a step 102 of obtaining high-temperature treated metal oxide/silicate particles. These particles have been previously exposed to temperatures exceeding 1000°C during their original use or manufacturing process. The high-temperature treatment may result in structural changes and bonding characteristics that can be advantageous for friction material applications.

In some examples, the metal oxide/silicate particles comprise at least one of magnesium oxide, zirconium oxide, zirconium silicate, and chromium oxide. These particles may be obtained from various recycled sources that have undergone high-temperature exposure in their previous applications.

One source of high-temperature treated metal oxide particles is used magnesium oxide-carbon refractory bricks. The method 200 illustrates this process in more detail, where a step 202 involves obtaining used magnesium oxide-carbon refractory bricks. These bricks typically contain magnesium oxide particles that have been exposed to extreme temperatures during their service life in industrial furnaces or other high-temperature environments.

Another source of high-temperature treated particles may be used zirconium-containing refractory materials. These materials can provide zirconium oxide or zirconium silicate particles that have undergone high-temperature exposure in their previous applications.

Similarly, chromium oxide particles may be obtained from used chromium-containing refractory materials that have been subjected to high temperatures in their prior use. These materials can provide chromium oxide particles that have undergone high-temperature exposure in their previous applications.

The high-temperature treated metal oxide/silicate particles obtained from these recycled sources may contain residual carbon or other contaminations that are not present in raw materials. For example, magnesium oxide particles from used magnesium oxide-carbon refractory bricks may be bonded with residual carbon resulting from their previous high-temperature treatment, forming a composite powder increasing their usefulness to the inventive method even further.

Before further processing, the obtained materials may undergo cleaning to remove slags and heavy metals. This cleaning step helps ensure the purity and consistency of the particles for use in friction material production.

The method 200 proceeds optionally to a step 204 where magnesium oxide particles are extracted from the used bricks. This extraction process may involve crushing, grinding, or other separation techniques to isolate the desired particles from the brick matrix. Alternatively or additionally, pre-sized particles can be used and/or processed in step 108

By utilizing these high-temperature treated metal oxide/silicate particles from recycled sources, the method 100 and method 200 provide an approach to obtaining raw materials for friction material production that may offer both environmental and performance benefits.

After obtaining the high-temperature treated metal oxide/silicate particles, the method 100 proceeds to a step 104 of processing the particles to achieve a desired particle size distribution. Similarly, in the method 200, a step 208 involves processing the extracted magnesium oxide particles to achieve the same particle size distribution.

The processing of the high-temperature treated metal oxide/silicate particles typically involves grinding or a combination of grinding and sieving techniques. These techniques are employed to reduce the particle size and achieve a uniform distribution within the range of 30-120 microns.

Grinding may be performed using various types of grinding equipment, such as ball mills, rod mills, or vertical roller mills. The choice of grinding equipment may depend on factors such as the initial size of the particles, the hardness of the material, and the desired final particle size distribution.

In some examples, the grinding process may be followed by a sieving step to ensure that the particles fall within the desired size range of 30-120 microns. Sieving may be performed using mechanical sieves or air classifiers, which separate particles based on their size and weight.

The particle size distribution of 30-120 microns is selected to optimize the performance characteristics of the friction material. Particles within this size range may provide a balance between surface area for effective bonding with the resin matrix and sufficient particle size to contribute to the mechanical properties of the final friction material.

Particles that are too small (below 30 microns) may not contribute effectively to the mechanical strength of the friction material, while particles that are too large (above 120 microns) may not disperse uniformly within the resin matrix or may lead to inconsistent friction performance.

By carefully controlling the particle size distribution through grinding and sieving processes, the methods 100 and 200 ensure that the high-temperature treated metal oxide/silicate particles are optimally prepared for incorporation into the friction material composition.

After processing the high-temperature treated metal oxide/silicate particles to achieve the desired particle size distribution, the method 100 proceeds to a step 106 of incorporating the processed particles into a resin matrix to form the friction material. Similarly, in the method 200, a step 212 involves incorporating the processed particles into a resin matrix.

The resin matrix may comprise a phenolic resin. Phenolic resins are commonly used in friction material compositions due to their high temperature resistance and binding properties. In some examples, the friction material composition may comprise 5-30% by weight of the phenolic resin matrix.

Incorporating the processed high-temperature treated metal oxide/silicate particles into the resin matrix typically involves mixing the particles with the phenolic resin.

This mixing process may be performed using various techniques, such as mechanical mixing, high-shear mixing, or kneading. The choice of mixing technique may depend on factors such as the viscosity of the resin, the particle size distribution, and the desired uniformity of the final mixture.

The metal oxide/silicate particles incorporated into the resin matrix may comprise at least one of magnesium oxide, zirconium oxide, zirconium silicate, or chromium oxide. These particles, having been previously subjected to high-temperature treatment above 1000°C, may exhibit unique properties that can influence the performance of the friction material.

In some examples, the friction material composition may comprise 15-40% by weight of the high-temperature treated metal oxide/silicate particles. The specific proportion of particles may be adjusted based on the desired friction characteristics and mechanical properties of the final friction material.

During the mixing process, care may be taken to ensure uniform dispersion of the particles within the resin matrix. Uniform dispersion helps to achieve consistent friction performance and mechanical properties throughout the friction material.

The incorporation of the processed high-temperature treated metal oxide/silicate particles into the resin matrix marks a significant step in the formation of the friction material. This step combines the unique properties of the high-temperature treated particles with the binding and heat-resistant characteristics of the phenolic resin, creating a composite material suitable for various friction applications.

After incorporating the processed high-temperature treated metal oxide/silicate particles into the resin matrix, the method 100 may proceed to a step 110 of adding fibrous reinforcement materials to the mixture. This step is optional and may be performed based on the desired properties of the final friction material.

The fibrous reinforcement materials may comprise at least one of aramid, steel, polymer, glass, carbon or natural fibers. In some examples, the friction material composition may comprise 5-20% by weight of fibrous reinforcement materials selected from at least one of aramid fibers or glass fibers.

Adding fibrous reinforcement materials to the mixture of metal oxide particles and phenolic resin can enhance various properties of the friction material. These fibers may contribute to improved mechanical strength, wear resistance, and thermal stability of the final product.

Aramid fibers, for instance, may provide high tensile strength and heat resistance to the friction material. These properties can help maintain the integrity of the friction material under high stress and temperature conditions typically encountered in braking or clutch applications.

Glass fibers, on the other hand, may offer good thermal stability and dimensional stability to the friction material. These fibers can help reduce thermal expansion and maintain consistent performance across a wide range of operating temperatures.

The process of adding fibrous reinforcement materials typically involves dispersing the fibers uniformly throughout the mixture of metal oxide particles and phenolic resin. This dispersion may be achieved through mechanical mixing or other suitable techniques to ensure even distribution of the fibers within the composition.

The addition of fibrous reinforcement materials represents a step in tailoring the properties of the friction material to meet specific performance requirements. By carefully selecting the type and proportion of fibers, the method 100 allows for customization of the friction material's characteristics to suit various applications and operating conditions.

The method 100 concludes with a step 112 of forming the final friction material. Similarly, the method 200 ends with a step 214 where the friction material is formed from the mixture of processed particles and resin matrix.

Forming the final friction material typically involves molding the mixture of processed high-temperature treated metal oxide/silicate particles, resin matrix, and optional fibrous reinforcement materials into a desired shape. The molding process may be performed using various techniques such as compression molding, transfer molding, or injection molding, depending on the specific requirements of the friction material application.

After molding, the friction material undergoes a curing process. Curing involves exposing the molded material to elevated temperatures for a specified duration to allow the resin matrix to crosslink and harden. The curing temperature and duration may vary depending on the specific resin system used and the desired properties of the final friction material.

In some examples, the curing process may be followed by post-curing steps to further enhance the properties of the friction material. Post-curing may involve additional heat treatment at higher temperatures or for longer durations than the initial curing process.

The formed friction material may exhibit a friction coefficient between 0.35 and 0.50. This range of friction coefficients may be suitable for various applications, including brake pads for automotive and industrial use.

In addition to the high-temperature treated metal oxide/silicate particles, resin matrix, and optional fibrous reinforcement materials, the friction material composition may comprise 0-25% by weight of additional additives. These additives may include friction modifiers, wear modifiers, noise suppressants, or other components that enhance specific properties of the friction material.

The final friction material, formed through the molding, curing, and optional post-processing steps, may possess a combination of properties that make the friction material suitable for various applications requiring high-performance friction components.

The interaction of various elements in the friction material composition, particularly the use of recycled high-temperature treated particles, contributes to the production of a friction material with improved properties. The method 100 and method 200 illustrate processes for incorporating these recycled particles into the friction material composition.

The high-temperature treated metal oxide/silicate particles obtained in step 102 of method 100 and step 204 of method 200 may exhibit unique structural characteristics due to their previous exposure to temperatures exceeding 1000°C. These structural changes may contribute to enhanced thermal stability of the final friction material. The high-temperature treatment may alter the crystal structure or surface properties of the particles, potentially improving their resistance to thermal degradation during use in high-temperature friction applications.

The processing of the high-temperature treated particles to achieve a particle size distribution of 30-120 microns, as shown in step 104 of method 100 and step 208 of method 200, may contribute to improved mechanical strength of the friction material. The controlled particle size distribution may allow for optimal packing and interaction between the particles and the resin matrix, potentially enhancing the overall structural integrity of the friction material.

When the processed high-temperature treated particles are incorporated into the resin matrix in step 106 of method 100 and step 212 of method 200, the interaction between the particles and the resin may be influenced by the unique surface characteristics of the recycled particles. For example, the magnesium oxide particles obtained from used magnesium oxide-carbon refractory bricks may contain residual carbon. This residual carbon content may have a positive effect on the mechanical strength of the friction material. The carbon may act as a reinforcing agent, potentially improving the bonding between the particles and the resin matrix.

The friction material produced using these recycled high-temperature treated particles may exhibit improved mechanical strength compared to a friction material produced using virgin metal oxide/silicate particles without previous high-temperature treatment. The combination of altered particle structure, controlled size distribution, and potential reinforcing effects from residual carbon may contribute to this enhanced mechanical strength.

In addition to performance benefits, the use of recycled high-temperature treated particles in the friction material composition may lead to reduced environmental impact. By utilizing materials that have already undergone high-temperature processing in their previous applications, the method 100 and method 200 may reduce the energy consumption and associated carbon emissions typically required for processing virgin raw materials. This approach aligns with sustainable manufacturing practices and may contribute to a lower overall carbon footprint for the friction material production process.

The interaction of these recycled high-temperature treated particles with other components of the friction material composition, such as the resin matrix and optional fibrous reinforcement materials, may result in a friction material with a combination of improved thermal stability, enhanced mechanical strength, and reduced environmental impact. These properties may make the friction material suitable for a wide range of applications requiring high-performance friction components.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 wt.%" is intended to mean "about 40 wt.%".

A number of implementations have been described. Nevertheless, it will be understood that various modifications may be made without departing from the spirit and scope of the disclosure. Accordingly, other implementations are within the scope of the following claims.

## Claims

1. A method for producing a friction material, comprising:
obtaining metal oxide/silicate particles that have been previously exposed to high-temperature treatment above 1000°C;
processing the high-temperature treated metal oxide/silicate particles to achieve a particle size distribution of 30-120 microns; and
incorporating the processed high-temperature treated metal oxide/silicate particles into a resin matrix to form the friction material,
wherein the metal oxide/silicate particles comprise at least one of magnesium oxide, zirconium oxide, zirconium silicate, and chromium oxide.

2. The method of claim 1, wherein is composite powder containing magnesium oxide particles bonded with residual carbon resulting from their previous high-temperature treatment.

3. The method of claim 1, wherein the metal oxide particles comprise magnesium oxide particles obtained from used magnesium oxide-carbon refractory bricks.

4. The method of claim 3, wherein the magnesium oxide particles contain 5-15% residual carbon by weight.

5. The method of claim 1, wherein metal oxide/silicate particles comprise zirconium silicate particles obtained from used zirconium-containing refractory materials.

6. The method of claim 1, wherein the metal oxide/silicate particles comprise chromium oxide particles obtained from used chromium-containing refractory materials.

7. The method of claim 1, wherein processing the high-temperature treated metal oxide/silicate particles comprises grinding or grinding and sieving the particles to achieve the particle size distribution of 30-120 microns.

8. The method of claim 1, wherein incorporating the processed high-temperature treated metal oxide particles into the resin matrix comprises mixing the particles with a phenolic resin.

9. The method of claim 8, further comprising adding fibrous reinforcement materials to the mixture of metal oxide particles and phenolic resin.

10. The method of claim 9, wherein the fibrous reinforcement materials comprise at least one of aramid, steel, polymer, glass, carbon or natural fibers.

11. A friction material composition comprising:
15-40% by weight of metal oxide/silicate particles that have been previously subjected to high-temperature treatment above 1000°C, wherein the metal oxide/silicate particles have a particle size distribution of 30-120 microns and comprise at least one of magnesium oxide, zirconium oxide, zirconium silicate, or chromium oxide;
5-30% by weight of a phenolic resin matrix;
5-20% by weight of fibrous reinforcement materials selected from at least one of aramid fibers or glass fibers; and
0-25% by weight of additional additives,
wherein the friction material exhibits a friction coefficient between 0.35 and 0.50.

12. The friction material composition of claim 11, wherein the metal oxide/silicate particles comprise magnesium oxide particles obtained from used magnesium oxide-carbon refractory bricks.

13. The friction material composition of claim 11 or 12, wherein the metal oxide/silicate particles comprise zirconium oxide/ silicate particles obtained from used zirconium-containing refractory materials.

14. The friction material composition of any one of claims 11 to 13, wherein the metal oxide/ silicate particles comprise chromium oxide particles obtained from used chromium-containing refractory materials.

15. The friction material composition of any one of claims 11 to 14, wherein the fibrous reinforcement materials comprise aramid fibers.

16. The friction material composition of any one of claims 11 to 14, wherein the fibrous reinforcement materials comprise glass fibers.

17. The friction material composition of any one of claims 11 to 16, wherein the friction material exhibits improved mechanical strength compared to a friction material produced using virgin metal oxide/silicate particles without previous high-temperature treatment.

18. The friction material composition of any one of claims 11 to 17, wherein the metal oxide, in particular the MgO particles may contain 5-15% residual carbon by weight.
